(19) Europäisches Patentamt
European Patent Office
Office européen des brevets

(11) **EP 2 145 813 B1**

(12) **EUROPÄISCHE PATENTSCHRIFT**

(45) Veröffentlichungstag und Bekanntmachung des Hinweises auf die Patenterteilung:
**18.04.2012  Patentblatt 2012/16**

(51) Int Cl.:
***B62D 13/00*** *(2006.01)*      ***B62D 13/04*** *(2006.01)*

(21) Anmeldenummer: **09160144.3**

(22) Anmeldetag: **13.05.2009**

(54) **Verfahren und Vorrichtung zur Lenkung eines Anhängers**

Method and device for steering a trailer

Procédé et dispositif destinés à la direction d'une remorque

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.07.2008  DE 102008033729**

(43) Veröffentlichungstag der Anmeldung:
**20.01.2010  Patentblatt 2010/03**

(73) Patentinhaber: **Fliegl, Josef**
**84513 Töging (DE)**

(72) Erfinder: **Fliegl, Josef**
**84513 Töging (DE)**

(74) Vertreter: **Tetzner, Michael**
**Van-Gogh-Strasse 3**
**81479 München (DE)**

(56) Entgegenhaltungen:
**EP-A- 1 081 020     US-A- 4 982 976**

**Beschreibung**

Die Erfindung betrifft ein Verfahren und eine Vorrichtung zur Lenkung eines Anhängers, der an ein Zugfahrzeug gelenkig angehängt ist und wenigstens zwei Achsen aufweist, von denen wenigstens eine lenkbar ist, wobei die Winkelgeschwindigkeit des Zugfahrzeuges und die Bahngeschwindigkeit des Anhängers ermittelt wird.

Aus der EP 1 081 020 B1 ist ein Verfahren zur spurgetreuen Nachführung eines landwirtschaftlichen Anhängers bekannt. Diese Fahrweise ist vor allem auf Feldern mit hohem Pflanzenstand erwünscht, um bei der Kurvenfahrt möglichst wenig Pflanzen zu beschädigen. Zur Nachführung wird bei diesem bekannten Verfahren ein traktorseitiges und ein anhängerseitiges Winkelmesssignal einer Regelvorrichtung zugeführt. Weiterhin erhält die Regelvorrichtung ein Wegsignal, wobei die vorhandenen Aktoren derart angesteuert werden, dass der jeweilige Schnittpunkt der Traktormittellinie und der Anhängermittellinie als ein virtueller Anlenkpunkt jeweils, wenn sich diese auf einer Kreisbahn befinden, äquidistant zur Achsmittelpunkten einer Traktorachse und einer Anhängerachse geführt wird.

Durch das spurgetreue Nachfahren des Anhängers in der Kurve wird der überfahrene Bodenbereich sowohl durch den Traktor als auch durch den Anhänger verdichtet. Dies ist aber bei anderen Anwendungsfällen, insbesondere bei niedrigem Pflanzenstand nicht erwünscht. Bei einem einachsigen, ungelenkten Anhänger folgt der Anhänger dem Zugfahrzeug immer auf einer engeren Fahrkurve. Der Anhänger schneidet somit die Kurve ab. Bei einem Anhänger mit mehreren Starrenachsen führt dies bei Kurvenfahrten aber zwangsläufig zu einer unerwünschten Relativbewegung zwischen Reifen und Boden. Bei hartem Untergrund, beispielsweise auf Asphalt, kommt es dabei zum Abrieb der Reifen, während bei weichem Untergrund der Boden entsprechend in Mitleidenschaft gezogen wird.

Aus der US 4,982,976 ist ferner ein Anhänger mit einer starren Achse und zwei lenkbaren Achsen bekannt. Dabei werden die lenkbaren Achsen derart angesteuert, dass der Kurvenmittelpunkt auf der Verlängerung der starren Achse liegt. Die Ansteuerung erfolgt hierbei über rein mechanische Mittel, die auf dem Einschlagwinkel von Zugfahrzeug und Anhänger basieren.

Der Erfindung liegt die Aufgabe zugrunde, ein Verfahren sowie eine Vorrichtung zur Lenkung eines Anhängers mit wenigstens zwei Achsen anzugeben, wobei der Anhänger dem Traktor in einer eigenen Spur folgt und unerwünschte Relativbewegungen zwischen Reifen und Untergrund weitestgehend vermieden werden.

Erfindungsgemäß wird diese Aufgabe durch die Merkmale der Ansprüche 1 und 9 gelöst.

Beim erfindungsgemäßen Verfahren zur Lenkung eines Anhängers, der an ein Zugfahrzeug gelenkig angehängt ist und der eine starre und wenigstens eine lenkbare Achse aufweist, wird die Winkelgeschwindigkeit des Zugfahrzeuges und die Bahngeschwindigkeit des Anhängers ermittelt. Die lenkbare Achse wird dann derart angesteuert, dass der Kurvenmittelpunkt des Anhängers auf der Verlängerung der starren Achse liegt.

Der Kurvenradius des Traktors und die Lage der starren Achse bestimmt somit den Kurvenradius des Anhängers und gibt dadurch die Einschlagwinkel der Räder der gelenkten Achsen vor. Durch dieses Verfahren kann der Anhänger in der Kurve in einer eigenen Spur folgen, ohne dabei den Boden bzw. die Räder durch unerwünschte Reibbewegungen zu belasten.

Die erfindungsgemäße Vorrichtung zur Lenkung eines Anhängers, der an ein Zugfahrzeug gelenkig angehängt ist und wenigstens zwei Achsen aufweist, von denen wenigstens eine lenkbar ist, weist Mittel zur Ermittlung der Winkelgeschwindigkeit des Zugfahrzeuges und Mittel zur Ermittlung der Bahngeschwindigkeit des Anhängers sowie eine Steuereinrichtung zur Steuerung des Lenkeinschlags der lenkbaren Achse in Abhängigkeit der Winkelgeschwindigkeit des Zugfahrzeuges und der Bahngeschwindigkeit des Anhängers auf. Die Steuereinrichtung zur Durchführung des Verfahrens ist dabei so ausgebildet, dass die lenkbare Achse derart angesteuert wird, dass der Kurvenmittelpunkt des Anhängers auf der Verlängerung der starren Achse liegt.

Weitere Ausgestaltungen der Erfindung sind Gegenstand der Unteransprüche.

Erfindungsgemäß wird aus der Winkelgeschwindigkeit des Zugfahrzeuges und der Bahngeschwindigkeit des Anhängers der Kurvenradius des Anhängers ermittelt. Dabei kann die Bahngeschwindigkeit des Anhängers durch Messung der Drehzahl von wenigstens einem Rad des Anhängers oder durch Messung der Geschwindigkeit über dem Boden, insbesondere durch Radarmessung, ermittelt werden.

Für jede gelenkte Achse wird dann der Einschlagwinkel der Räder so berechnet, dass die Verlängerung der Achse dieser Räder durch den Kurvenmittelpunkt des Anhängers verläuft.

Dieses Verfahren kann sowohl bei der Vorwärtsfahrt als auch bei der Rückfahrtsfahrt eingesetzt werden. Für die Steuerung des Lenkeinschlags der gelenkten Achsen bei der Rückfahrtsfahrt wird zusätzlich die Winkelgeschwindigkeit des Anhängers gemessen. Kommt es beim Rückwärtsfahren zu einer Fahrsituation, bei der die Winkelgeschwindigkeit des Zugfahrzeuges und die Winkelgeschwindigkeit des Anhängers entgegengesetzt sind, wird für die Steuerung des Lenkeinschlags der gelenkten Achsen des Anhängers lediglich die Winkelgeschwindigkeit des Anhängers und nicht die Winkelgeschwindigkeit des Zugfahrzeuges bei der Berechnung berücksichtigt.

Weitere Vorteile und Ausgestaltungen der Erfindung werden anhand der nachfolgenden Beschreibung und der Zeichnung näher erläutert.

In der Zeichnung zeigen

Fig. 1     eine schematische Darstellung eines Zugfahrzeuges mit Anhänger während einer Kurvenfahrt und

Fig. 2 eine schematische Darstellung der Einschlagwinkel in Abhängigkeit des Kurvenmittelpunkts.

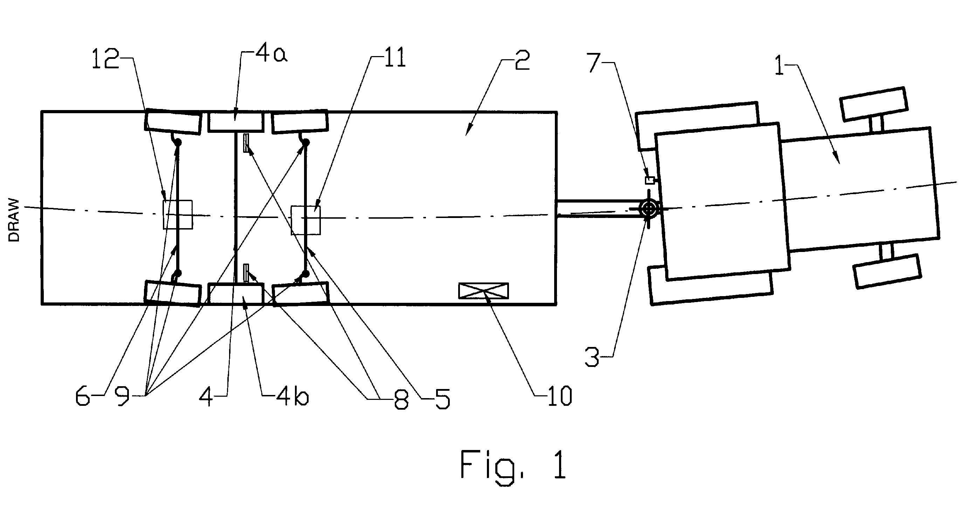

In Fig. 1 ist ein Zugfahrzeug 1 und ein Anhänger 2 bei der Kurvenfahrt dargestellt. Das Zugfahrzeug 1, beispielsweise ein Traktor, weist eine Anhängerkupplung 3 (Zugmaulkupplung, Kugelkopfkupplung,...) auf, an die der Anhänger 2 gelenkig angehängt ist.

Der Anhänger 2 weist im dargestellten Ausführungsbeispiel drei Achsen 4, 5, 6 auf, wobei die mittlere Achse 4 starr und die beiden anderen Achsen 5, 6 lenkbar ausgebildet sind.

Am Zugfahrzeug 1 sind in der Nähe der Anhängerkupplung 3 Mittel 7 zur Ermittlung der Winkelgeschwindigkeit des Zugfahrzeuges vorgesehen. Diese Mittel werden beispielsweise durch ein Gyroskop gebildet. Weiterhin sieht der Anhänger 2 Mittel 8 zur Ermittlung der Bahngeschwindigkeit des Anhängers vor. Diese Mittel 8 können beispielsweise durch Sensoren zur Messung der Drehzahl von wenigstens einem Rad 4a, 4b des Anhängers 2 gebildet. Es wäre aber auch denkbar, Sensoren zur Messung der Bahngeschwindigkeit des Anhängers einzusetzen, die in der Längsmittelachse des Anhängers angeordnet sind, wobei die Bahngeschwindigkeit des Anhängers 2 durch Messung der Geschwindigkeit über dem Boden, insbesondere durch Radarmessung ermittelt wird.

Der Lenkeinschlag an den gelenkten Achsen 5, 6 wird über Mitteln 9 gemessen.

Weiterhin ist eine Steuereinheit 10 vorgesehen, die mit den Mitteln 7, 8 und 9 in Verbindung steht und Aktoren 11, 12 der gelenkten Achse 5, 6 zur Veränderung des Lenkeinschlags ansteuert.

Im Folgenden wird näher erläutert, wie anhand der Messsignale der Einschlagwinkel an den gelenkten Achsen 5, 6 ermittelt wird.

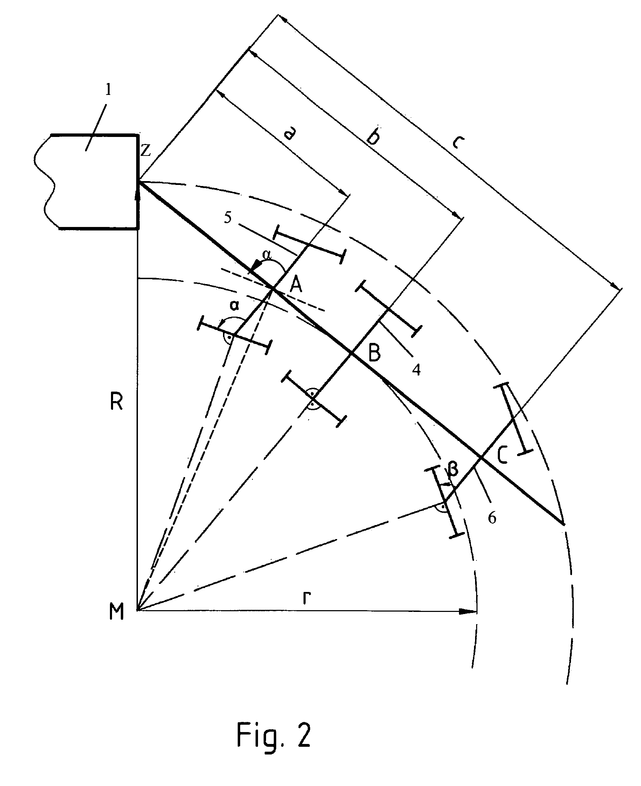

In Fig. 2 sind der Anhänger und das Zugfahrzeug nur noch sehr schematisch dargestellt. Die verwendeten Buchstaben haben dabei folgende Bedeutung:

Z: Zugpunkt, an dem der Anhänger am Zugfahrzeug angelenkt ist,

A: Schnittpunkt der lenkbaren Achse 5 mit der Längsmittelachse des Anhängers,

B: Schnittpunkt der lenkbaren Achse 4 mit der Längsmittelachse des Anhängers,

C: Schnittpunkt der lenkbaren Achse 6 mit der Längsmittelachse des Anhängers,

M: Mittelpunkt der Kreisbahn des Anhängers und des Zugfahrzeuges,

R: Kurvenradius des Zugfahrzeuges,

r: Kurvenradius des Anhängers,

a: Abstand der Achse 5 vom Zugpunkt Z,

b: Abstand der starren Achse 4 vom Zugpunkt Z,

c: Abstand der lenkbaren Achse 6 vom Zugpunkt Z,

$\alpha$: Lenkeinschlag der lenkbaren Achse 5,

$\beta$: Lenkeinschlag der lenkbaren Achse 6,

$\omega$: Winkelgeschwindigkeit des Zugfahrzeuges,

v: Bahngeschwindigkeit des Anhängers.

Gemäß den Winkelgeschwindigkeit $\omega$ des Zugfahrzeuges und der Bahngeschwindigkeit v des Anhängers lässt sich der Kurvenradius R des Zugfahrzeuges ermitteln:

$$R = \frac{v}{w}$$

Auf diese Weise lässt sich der Kurvenmittelpunkt M bestimmen. Die starre Achse 4 ist dabei so ausgerichtet, dass ihre Verlängerung durch den Kurvenmittelpunkt M verläuft.

Der Kurveradius r des Anhängers lässt sich dann aus dem rechtwinkligen Dreieck ZBM errechnen.

Die Räder an den lenkbaren Achsen 5, 6 müssen so eingeschlagen werden, dass die jeweiligen Radachsen ebenfalls durch den Mittelpunkt M verlaufen. Für eine 100%ige Ausrichtung der beiden Räder einer lenkbaren Achse, müsste der Einschlagwinkel für die beiden Räder einer Achse gesondert ermittelt werden. Üblicherweise erfolgt jedoch eine gemeinsame Verstellung der beiden Räder einer lenkbaren Achse über eine Spurstange, die das innere Rad mechanisch etwas stärker als das äußere Rad einschlägt. Man geht daher für die Berechnung des Einschlagswinkel davon aus, dass sich das Rad im Schnittpunkt der Achse mit der Längsmittelachse des Anhängers befmdet. Im Falle der lenkbaren Achse 5 wird somit nicht der Winkel $\alpha$, sondern hilfsweise der Winkel $\alpha'$ errechnet. Die Berechnung erfolgt dabei über die allgemein bekannten Dreiecksrechnungen.

Befindet sich die starre Achse zwischen zwei lenkbaren Achsen, wie im dargestellten Ausführungsbeispiel, müssen die Räder der vorderen bzw. der hinteren Achse zu unterschiedlichen Seiten einschlagen.

Durch diese Art der Ansteuerung der lenkbaren Achsen ist der Kurvenradius r des Anhängers kleiner als der Kurvenradius R des Zugfahrzeuges. Der Anhänger folgt dem Zugfahrzeuges somit in einer eigenen Spur.

Grundsätzlich lässt sich diese Art der Steuerung sowohl für die Vorwärtsfahrt als auch für die Rückwärtsfahrt anwenden. Um jedoch die lenkbaren Achsen des Anhängers beim Rückwärtsfahren in jeder Fahrsituation richtig ansteuern zu können, ist es zweckmäßig auch die Winkelgeschwindigkeit des Anhängers zu ermitteln.

Tritt beim Rückwärtsfahren die Fahrsituation auf, dass das Zugfahrzeug und der Anhänger entgegengesetzte Winkelgeschwindigkeiten aufweisen, also zu entgegengesetzten Seiten einschlagen, ist eine sinnvolle Steuerung des Anhängers nur dann möglich, wenn lediglich die Winkelgeschwindigkeit des Anhängers berücksichtigt wird.

Wenngleich der in der Zeichnung dargestellte Anhänger drei Achsen aufweist, ist die Erfindung auch mit einem Anhänger durchführbar, der lediglich eine starre und eine lenkbare oder eine starre und mehr als zwei lenkbare Achsen aufweist. Es spielt grundsätzlich auch keine Rolle, wo die starre Achse im Bezug auf die lenkbaren Achsen angeordnet ist.

**Patentansprüche**

1. Verfahren zur Lenkung eines Anhängers (2), der an ein Zugfahrzeug (1) gelenkig angehängt ist und wenigstens zwei Achsen (4, 5, 6) aufweist, von denen wenigstens eine lenkbar ist, wobei die Winkelgeschwindigkeit ($\omega$) des Zugfahrzeugs (1) und die Bahngeschwindigkeit (v) des Anhängers (2) ermittelt wird,
**dadurch gekennzeichnet, dass** am Anhänger eine starre und wenigstens eine lenkbare Achse (4, 5, 6) vorgesehen sind, wobei die lenkbare Achse (5, 6) derart angesteuert wird, dass der Kurvenmittelpunkt des Anhängers (2) auf der Verlängerung der starren Achse (4) liegt.

2. Verfahren nach Anspruch 1, **dadurch gekennzeichnet, dass** aus der Winkelgeschwindigkeit des Zugfahrzeugs (1) und der Bahngeschwindigkeit (v) des Anhängers (2) der Kurvenradius (r) des Anhängers ermittelt wird.

3. Verfahren nach Anspruch 1, **dadurch gekennzeichnet, dass** die Bahngeschwindigkeit (v) des Anhängers (2) durch Messung der Drehzahl von wenigstens einem Rad des Anhängers ermittelt wird.

4. Verfahren nach Anspruch 1, **dadurch gekennzeichnet, dass** die Bahngeschwindigkeit (v) des Anhängers (2) in der Längsmittelachse des Anhängers ermittelt wird.

5. Verfahren nach Anspruch 1, **dadurch gekennzeichnet, dass** die Bahngeschwindigkeit (v) des Anhängers (2) durch Messung der Geschwindigkeit über dem Boden, insbesondere durch Radarmessung, ermittelt wird.

6. Verfahren nach Anspruch 1, **dadurch gekennzeichnet, dass** für jede gelenkte Achse (5,6) der Einschlagwinkel ($\alpha$, $\beta$) der Räder so berechnet wird, dass die Verlängerung der Achse der Räder durch den Kurvenmittelpunkt (M) des Anhängers (2) verläuft.

7. Verfahren nach Anspruch 1, **dadurch gekennzeichnet, dass** für die Steuerung des Anhängers (2) bei der Rückwärtsfahrt zusätzlich die Winkelgeschwindigkeit des Anhängers ermittelt wird.

8. Verfahren nach Anspruch 7, **dadurch gekennzeichnet, dass** die Steuerung für den Lenkeinschlag der gelenkten Achsen für die Berechung des Kurvenmittelpunkts (M) des Anhängers (2) nur die Winkelgeschwindigkeit des Anhängers berücksichtigt wird, wenn die Winkelgeschwindigkeit des Anhängers und die Winkelgeschwindigkeit des Zugfahrzeugs entgegengesetzt sind.

9. Vorrichtung zur Lenkung eines Anhängers (2), der an ein Zugfahrzeug (1) gelenkig angehängt ist und wenigstens zwei Achsen (4, 5, 6) aufweist, von denen wenigstens eine lenkbar ist, mit Mitteln (7) zur Ermittlung der Winkelgeschwindigkeit des Zugfahrzeugs und Mitteln (8) zur Ermittlung der Bahngeschwindigkeit des Anhängers sowie eine Steuereinrichtung (10) zur Steuerung des Lenkeinschlags der lenkbaren Achse in Abhängigkeit der Winkelgeschwindigkeit ($\omega$) des Zugfahrzeugs und der Bahngeschwindigkeit (v) des Anhängers,
**dadurch gekennzeichnet, dass** eine starre und wenigstens eine lenkbare Achse (4, 5, 6) vorgesehen sind, und die Steuereinrichtung (10) zur Durchführung des Verfahrens nach einem oder mehreren der vorhergehenden Ansprüche ausgebildet ist.

**Claims**

1. Method for steering a trailer (2) which is suspended on a towing vehicle (1) in an articulated manner and which has at least two axles (4, 5, 6), of which at least one can be steered, the angular speed ($\omega$) of the towing vehicle (1) and the path speed (v) of the trailer (2) being established, **characterised in that** there are provided on the trailer a rigid axle and at least one steerable axle (4, 5, 6), the steerable axle (5, 6) being controlled in such a manner that the curve centre point of the trailer (2) is located on the extension of the rigid axle (4).

2. Method according to claim 1, **characterised in that** the radius of curvature (r) of the trailer is established from the angular speed of the towing vehicle (1) and the path speed (v) of the trailer (2).

3. Method according to claim 1, **characterised in that** the path speed (v) of the trailer (2) is established by measuring the speed of at least one wheel of the trailer.

4. Method according to claim 1, **characterised in that** the path speed (v) of the trailer (2) is established in the longitudinal centre axis of the trailer.

5. Method according to claim 1, **characterised in that** the path speed (v) of the trailer (2) is established by measuring the speed over the ground, in particular by means of radar measurement.

**6.** Method according to claim 1, **characterised in that**, for each articulated axle (5, 6), the angle of lock ($\alpha$, $\beta$) of the wheels is calculated in such a manner that the extension of the axle of the wheels extends through the curve centre point (M) of the trailer (2).

**7.** Method according to claim 1, **characterised in that**, for the control of the trailer (2) during reverse travel, the angular speed of the trailer is additionally established.

**8.** Method according to claim 7, **characterised in that**, for the control for the steering lock of the steered axles for the calculation of the curve centre point (M) of the trailer (2), only the angular speed of the trailer is taken into consideration when the angular speed of the trailer and the angular speed of the towing vehicle are opposed.

**9.** Device for steering a trailer (2) which is suspended on a towing vehicle (1) in an articulated manner and which has at least two axles (4, 5, 6), of which at least one can be steered, having means (7) for establishing the angular speed of the towing vehicle and means (8) for establishing the path speed of the trailer and a control device (10) for controlling the steering lock of the steerable axle in accordance with the angular speed ($\omega$) of the towing vehicle and the path speed (v) of the trailer, **characterised in that** there are provided a rigid axle and at least one steerable axle (4, 5, 6), and the control device (10) is constructed for carrying out the method according to one or more of the preceding claims.

**Revendications**

**1.** Procédé destiné à la direction d'une remorque (2), qui est accrochée de manière articulée à un véhicule tracteur (1) et qui est dotée d'au moins deux essieux (4, 5, 6), dont au moins l'un est orientable, sachant que l'on détermine la vitesse angulaire ($\omega$) du véhicule tracteur (1) et la vitesse d'avance (v) de la remorque (2), **caractérisé en ce que** la remorque est dotée d'un essieu rigide et d'au moins un essieu orientable (4, 5, 6), l'essieu orientable (5, 6) étant commandé de sorte que le point central de virage de la remorque (2) soit situé sur le prolongement de l'essieu rigide (4).

**2.** Procédé selon la revendication 1, **caractérisé en ce que** l'on détermine le rayon de virage (r) de la remorque à partir de la vitesse angulaire du véhicule tracteur (1) et de la vitesse d'avance (v) de la remorque.

**3.** Procédé selon la revendication 1, **caractérisé en ce que** l'on détermine la vitesse d'avance (v) de la remorque (2) par mesure de la vitesse de rotation d'au moins une roue de la remorque.

**4.** Procédé selon la revendication 1, **caractérisé en ce que** l'on détermine la vitesse d'avance (v) de la remorque (2) dans l'axe central longitudinal.

**5.** Procédé selon la revendication 1, **caractérisé en ce que** l'on détermine la vitesse d'avance (v) de la remorque (2) par mesure au-dessus du sol, en particulier par mesure radar.

**6.** Procédé selon la revendication 1, **caractérisé en ce que**, pour chaque essieu orientable (5, 6), l'angle de braquage ($\alpha$, $\beta$) des roues est calculé de sorte que le prolongement de l'axe des roues s'étende à travers le point central de virage (M) de la remorque (2).

**7.** Procédé selon la revendication 1, **caractérisé en ce que**, pour la direction de la remorque (2) en marche arrière, la vitesse angulaire de la remorque est déterminée en supplément.

**8.** Procédé selon la revendication 7, **caractérisé en ce que**, lors de la commande du braquage des essieux orientables, pour le calcul du point central de virage (M) de la remorque (2), seule la vitesse angulaire de la remorque est prise en considération, quand la vitesse angulaire de la remorque et la vitesse angulaire du véhicule tracteur sont opposées.

**9.** Dispositif de direction d'une remorque (2), qui est accrochée de manière articulée à un véhicule tracteur (1) et qui est dotée d'au moins deux essieux (4, 5, 6), dont l'un au moins est orientable, lequel dispositif est doté de moyens (7) de détermination de la vitesse angulaire du véhicule tracteur et de moyens (8) pour la détermination de la vitesse d'avance de la remorque, ainsi que d'un dispositif de commande (0) pour la commande du braquage de l'essieu orientable en fonction de la vitesse angulaire (w) du véhicule tracteur et de la vitesse d'avance (v) de la remorque, **caractérisé en ce que** sont prévus un essieu rigide et au moins un essieu orientable (4, 5, 6) et que le dispositif de commande (10) est conçu pour l'exécution du procédé selon l'une ou plusieurs des revendications précédentes.

Fig. 1

EP 2 145 813 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1081020 B1
- US 4982976 A